# EUROPÄISCHE PATENTSCHRIFT

(11) **EP 2 976 672 B1**
(45) Veröffentlichungstag und Bekanntmachung des Hinweises auf die Patenterteilung: **06.05.2020**
(21) Anmeldenummer: 14709247.2
(22) Anmeldetag: 07.03.2014
(51) Int. Cl.: G02B 27/09

(54) **VORRICHTUNG ZUR HOMOGENISIERUNG EINES LASERSTRAHLS**
DEVICE FOR HOMOGENIZING A LASER BEAM
DISPOSITIF D'HOMOGÉNÉISATION D'UN RAYON LASER

(30) Priorität: 20.03.2013 DE 102013102863
(43) Veröffentlichungstag der Anmeldung: 27.01.2016
(73) Patentinhaber: LIMO GmbH, 44319 Dortmund (DE)
(72) Erfinder: STEINER, Ingo, 44139 Dortmund (DE)
(74) Vertreter: Manske, Jörg
(86) Internationale Anmeldenummer: PCT/EP2014/054497
(87) Internationale Veröffentlichungsnummer: WO 2014/146916

(56) Entgegenhaltungen:
- EP-A1- 1 403 695
- WO-A1-2008/087012
- DE-A1-102007 026 730
- DE-A1-102008 036 569
- US-A1- 2008 112 057
- FENG HUANG ET AL: "Laser diode end-pumped efficient coupling system based on microlens arrays", PROCEEDINGS OF SPIE, SPIE, US, Bd. 7506, 19. Oktober 2009 (2009-10-19), Seiten 1-5, XP040504321, ISSN: 0277-786X, DOI: 10.1117/12.837356
- TEIPEL ANSGAR ET AL: "Beam shaping: top hat and customized intensity distributions for semiconductor manufacturing and inspection", OPTICAL MICROLITHOGRAPHY XXIV, SPIE, 1000 20TH ST. BELLINGHAM WA 98225-6705 USA, Bd. 7973, Nr. 1, 17. März 2011 (2011-03-17), Seiten 1-15, XP060009248, DOI: 10.1117/12.879640 [gefunden am 2011-03-22]

## Beschreibung

Die vorliegende Erfindung betrifft eine Vorrichtung zur Homogenisierung eines Laserstrahls nach dem Oberbegriff des Anspruchs 1.

Definitionen: In Ausbreitungsrichtung der Laserstrahlung meint die mittlere Ausbreitungsrichtung der Laserstrahlung, insbesondere wenn diese keine ebene Welle ist oder zumindest teilweise divergent ist. Mit Laserstrahl, Lichtstrahl, Teilstrahl oder Strahl ist, wenn nicht ausdrücklich etwas anderes angegeben ist, kein idealisierter Strahl der geometrischen Optik gemeint, sondern ein realer Lichtstrahl, wie beispielsweise ein Laserstrahl mit einem Gauß-Profil oder einem modifizierten Gauß-Profil oder einem Top-Hat-Profil, der keinen infinitesimal kleinen, sondern einen ausgedehnten Strahlquerschnitt aufweist.

Vorrichtungen der eingangs genannten Art zur Homogenisierung eines Laserstrahls sind aus dem Stand der Technik in unterschiedlichen Ausführungsformen bereits bekannt. Abbildende Vorrichtungen zur Homogenisierung eines Laserstrahls sind zweistufig ausgeführt und weisen eine erste Homogenisierungsstufe sowie eine zweite Homogenisierungsstufe auf, welche in Ausbreitungsrichtung hinter der ersten Homogenisierungsstufe angeordnet ist. Die erste Homogenisiererstufe umfasst ein erstes Substrat, das eine Lichteintrittsfläche und eine Lichtaustrittsfläche aufweist, wobei auf der Lichteintrittsfläche und/oder auf der Lichtaustrittsfläche ein erstes Linsenarray mit einer Mehrzahl von Zylinderlinsenmitteln ausgebildet ist, an denen der zu homogenisierende Laserstrahl gebrochen und in eine Mehrzahl von Teilstrahlenbündeln aufgeteilt werden kann. Die zweite Homogenisiererstufe umfasst ein zweites Substrat, das eine Lichteintrittsfläche und eine Lichtaustrittsfläche aufweist, wobei auf der Lichteintrittsfläche und/oder auf der Lichtaustrittsfläche ein zweites Linsenarray mit einer Mehrzahl von Zylinderlinsenmitteln ausgebildet ist, welche die durch das zweite Linsenarray transmittierten Teilstrahlen erneut brechen können. Der Laserstrahl weist nach dem Austritt aus der zweiten Homogenisiererstufe eine im Wesentlichen homogene Winkelverteilung auf. Darüber hinaus umfassen die aus dem Stand der Technik bekannten Vorrichtungen zur Homogenisierung eines Laserstrahls eine Fourierlinse, die in Strahlausbreitungsrichtung hinter dem zweiten Linsenarray angeordnet ist. Das zweite Linsenarray ist in Kombination mit der Fourierlinse dazu in der Lage, die Teilstrahlenbündel in einer Arbeitsebene, die insbesondere eine ausgangsseitige Brennebene der Fourierlinse sein kann, derart zu überlagern, dass dort zumindest in einer Richtung eine homogene (gleichmäßige) Intensitätsverteilung erhalten werden kann. Die Fourierlinse transformiert somit die im Wesentlichen homogene Winkelverteilung der Laserstrahlung in eine homogene Intensitätsverteilung in der Arbeitsebene.

Die Zylinderlinsenmittel des ersten und zweiten Linsenarrays können unterschiedliche Brennweiten aufweisen. Die Mittenabstände oder Scheitelabstände p1, p2 zweier benachbarter Zylinderlinsenmittel in einem Linsenarray (der so genannte "Pitch") sind für beide Linsenarrays gleich. Es gilt: p1 = p2. Die Brennweiten der Zylinderlinsenmittel der beiden Linsenarrays und die Abstände der Linsenarrays und der Fourierlinse von dem zweiten Linsenarray sind so gewählt, dass in der Arbeitsebene in einem bestimmten Abstand von dem zweiten Linsenarray eine feste Linienlänge oder Größe eines beleuchteten Felds erzeugt werden kann.

Die DE 10 2007 026 730 A1 offenbart eine Vorrichtung zur Erzeugung einer homogenen Winkelverteilung mit insgesamt drei Homogenisierungsstufen mit jeweils mindestens einem Linsenarray, wobei die Abstände zwischen den Homogenisierungsstufen variabel einstellbar sind. Eine Feldlinse (Fourierlinse) kann aus der homogenen Winkelverteilung eine homogene linienförmige Intensitätsverteilung in der Arbeitsebene erzeugen. Durch Verschieben der dritten Homogenisierungsstufe kann dabei die Winkelverteilung der Laserstrahlung eingestellt werden. Diese Verschiebung der dritten Homogenisierungsstufe kann im Ergebnis dazu verwendet werden, die Länge der Linie in der Arbeitsebene zu verändern. Der Mittenabstand (Pitch) der Linsenmittel der Linsenarrays ist in allen verwendeten Linsenarrays identisch.

Als nachteilig erweist sich bei den aus dem Stand der Technik bekannten Vorrichtungen zur Homogenisierung eines Laserstrahls, dass stets eine zusätzliche Fourierlinse vorgesehen werden muss, um in der Arbeitsebene die gewünschte homogene Intensitätsverteilung zu erhalten.

Eine gattungsgemäße Vorrichtung zur Homogenisierung eines Laserstrahls ist aus der DE 10 2008 036 569 A1 bekannt.

Die vorliegende Erfindung macht es sich zur Aufgabe, eine Vorrichtung zur Homogenisierung eines Laserstrahls anzugeben, die ohne das Vorsehen einer zusätzlichen Fourierlinse dazu in der Lage ist, in der Arbeitsebene zumindest in einer Richtung eine homogene Intensitätsverteilung zu erzeugen.

Die Lösung dieser Aufgabe liefert eine Vorrichtung zur Homogenisierung eines Laserstrahls der eingangs genannten Art mit den Merkmalen des kennzeichnenden Teils des Anspruchs 1. Die Unteransprüche betreffen vorteilhafte Weiterbildungen der vorliegenden Erfindung.

Eine Vorrichtung zur Homogenisierung von Laserstrahlung, wie sie aus der DE 10 2008 036 569 A1 bekannt ist, zeichnet sich dadurch aus, dass die Mittenabstände p1 der Zylinderlinsenmittel des ersten Linsenarrays größer als die Mittenabstände p2 der Zylinderlinsenmittel des zweiten Linsenarrays sind, wobei ein Linsenscheitel eines zentralen Zylinderlinsenmittels des ersten Linsenarrays mit einem Linsenscheitel des diesem zugeordneten zentralen Zylinderlinsenmittels des zweiten Linsenarrays fluchtet und die Linsenscheitel der übrigen Zylinderlinsenmittel des ersten Linsenarrays und die Linsenscheitel der übrigen Zylinderlinsenmittel des zweiten Linsenarrays und die Linsenscheitel der ihnen zugeordneten Zylinderlinsenmittel des ersten Linsenarrays ausgehend von der Mitte des zweiten Linsenarrays einen nach außen zunehmenden Scheitelversatz aufweisen, so dass in der Arbeitsebene zumindest in der ersten Richtung eine homogene Intensitätsverteilung erhalten werden kann. Eine erfindungsgemäße Vorrichtung zur Homogenisierung eines Laserstrahls zeichnet sich dadurch aus, dass für das Verhältnis der Mittenabstände p1/p2 der Zylinderlinsenmittel des ersten und des zweiten Linsenarrays gilt: 1 < p1/p2 ≤ 1,1, vorzugsweise 1 < p1/p2 ≤ 1,05. Der Begriff "zugeordnet" bedeutet in diesem Zusammenhang, dass jedes der von den Zylinderlinsenmitteln des ersten Linsenarrays erzeugten Teilstrahlenbündel genau durch eines der Zylinderlinsenmittel des zweiten Linsenarrays hindurchtritt (und zwar durch das dem Teilstrahlenbündel und folglich demjenigen Zylinderlinsenmittel des ersten Linsenarrays, welches diesen Teilstrahl erzeugt hat, zugeordnete Zylinderlinsenmittel). Erfindungsgemäß ist vorgesehen, dass die Mittenabstände p1 der Zylinderlinsenmittel des ersten Linsenarrays verschieden von den Mittenabständen p2 der Zylinderlinsenmittel des zweiten Linsenarrays sind, wobei p1 > p2 ist und darüber hinaus gilt: 1 < p1/p2 ≤ 1,1, vorzugsweise 1 < p1/p2 ≤ 1,05. Dass die Mittenabstände p1, p2 zwischen den Linsenscheiteln der benachbarten Zylinderlinsenmittel des ersten Linsenarrays und des zweiten Linsenarrays jeweils unterschiedlich sind, hat zur Folge, dass für die zentralen (mittleren) Zylinderlinsenmittel der beiden Linsenarrays der Linsenscheitel des zentralen Zylinderlinsenmittels des ersten Linsenarrays mit dem Linsenscheitel des diesem zugeordneten zentralen Zylinderlinsenmittels des zweiten Linsenarrays fluchtet. Für die Linsenscheitel der übrigen (beidseits zu den zentralen Linsenmitteln vorgesehenen) Zylinderlinsenmittel der beiden Linsenarrays ergibt sich ein nach außen zunehmender, seitlicher Versatz. Ausgehend von dem zentralen Zylinderlinsenmittel des zweiten Linsenarrays, dessen optische Achse mit der optischen Achse des diesem zugeordneten zentralen Zylinderlinsenmittels des ersten Linsenarrays fluchtet, weisen die Zylinderlinsenmittel des zweiten Linsenarrays auf Grund des Scheitelversatzes auch einen nach außen zunehmenden Versatz ihrer jeweiligen optischen Achsen in Bezug auf die optischen Achsen der ihnen zugeordneten Zylinderlinsenmittel des ersten Linsenarrays auf. Somit treffen die Teilstrahlenbündel mit einem seitlichen Versatz auf die ersten optisch funktionalen Grenzflächen der ihnen zugeordneten Zylinderlinsenmittel des zweiten Linsenarrays. Ein wesentlicher Vorteil der erfindungsgemäßen Vorrichtung zur Homogenisierung eines Laserstrahls besteht darin, dass diese fourierlinsenfrei ausgebildet ist. Überraschend hat es sich gezeigt, dass mit dem hier beschriebenen optischen Aufbau in der Arbeitsebene zumindest in einer Richtung eine homogene Intensitätsverteilung erhalten werden kann, ohne dass zu diesem Zweck eine zusätzliche Fourierlinse vorgesehen werden müsste.

Um die Strahlqualität in der Arbeitsebene weiter zu erhöhen, kann in einer bevorzugten Ausführungsform vorgesehen sein, dass die Vorrichtung ein Zylinderlinsenmittel umfasst, dessen Zylinderachse senkrecht zu den Zylinderachsen der Zylinderlinsenmittel der beiden Linsenarrays orientiert ist und das so ausgebildet ist und im Strahlweg derart hinter dem zweiten Linsenarray angeordnet ist, dass es die Teilstrahlen in der nach dem Hindurchtritt durch die beiden Linsenarrays nicht homogenisierten Achse in die Arbeitsebene fokussieren kann.

In einer besonders vorteilhaften Weiterbildung der Erfindung wird vorgeschlagen, dass
- das erste Substrat auf der zweiten optisch funktionalen Grenzfläche eine Mehrzahl von Zylinderlinsenmitteln umfasst, die in einer zweiten Richtung nebeneinander angeordnet sind und ein drittes Linsenarray bilden, wobei die in der zweiten Richtung nebeneinander angeordneten Zylinderlinsenmittel des ersten Substrats parallel zueinander orientierte Zylinderachsen aufweisen, welche orthogonal zu den Zylinderachsen der Zylinderlinsenmittel des ersten Linsenarrays orientiert sind,
- das zweite Substrat auf der zweiten optisch funktionalen Grenzfläche eine Mehrzahl von Zylinderlinsenmitteln umfasst, die in einer zweiten Richtung nebeneinander angeordnet sind und ein viertes Linsenarray bilden, wobei die in der zweiten Richtung nebeneinander angeordneten Zylinderlinsenmittel des zweiten Substrats parallel zueinander orientierte Zylinderachsen aufweisen, welche orthogonal zu den Zylinderachsen der Zylinderlinsenmittel des zweiten Linsenarrays orientiert sind.

Alternativ kann vorgesehen sein, dass die Vorrichtung ein drittes Substrat mit einem dritten Linsenarray sowie ein viertes Substrat mit einem vierten Linsenarray umfasst, wobei das dritte Linsenarray eine Mehrzahl von Zylinderlinsenmittel umfasst, die in der zweiten Richtung nebeneinander angeordnet sind und parallel zueinander orientierte Zylinderachsen aufweisen, welche orthogonal zu den Zylinderachsen der Zylinderlinsenmittel des ersten Linsenarrays orientiert sind, und wobei das vierte Linsenarray eine Mehrzahl von Zylinderlinsenmittel umfasst, die in der zweiten Richtung nebeneinander angeordnet sind und parallel zueinander orientierte Zylinderachsen aufweisen, welche orthogonal zu den Zylinderachsen der Zylinderlinsenmittel des zweiten Linsenarrays orientiert sind.

Dadurch ist es möglich, in der Arbeitsebene eine in zwei zueinander senkrechten Richtungen homogen ausgeleuchtete, im Wesentlichen rechteckige Intensitätsverteilung zu erhalten.

In einer besonders vorteilhaften Ausführungsform besteht die Möglichkeit, dass die Mittenabstände p3 der Zylinderlinsenmittel des dritten Linsenarrays größer als die Mittenabstände p4 der Zylinderlinsenmittel des vierten Linsenarrays sind. Analog zu den Zylinderlinsenmitteln des ersten und des zweiten Linsenarrays kann auch hier ein Versatz der Linsenscheitel für die außermittigen (nicht zentralen) Zylinderlinsenmittel erhalten werden.

In einer besonders bevorzugten Ausführungsform wird vorgeschlagen, dass die Brennweiten f₁ aller Zylinderlinsenmittel des ersten Linsenarrays identisch sind und/oder dass die Brennweiten f₂ aller Zylinderlinsenmittel des zweiten Linsenarrays identisch sind.

Bei einer zweistufigen Ausführung der beiden Linsenarrays kann in einer vorteilhaften Ausführungsform vorgesehen sein, dass die Brennweiten f₃ aller Zylinderlinsenmittel des dritten Linsenarrays identisch sind und/oder dass die Brennweiten f₄ aller Zylinderlinsenmittel des vierten Linsenarrays identisch sind.

In einer besonders vorteilhaften Ausführungsform wird vorgeschlagen, dass die Vorrichtung Mittel zur Variation des Abstands zwischen dem ersten Linsenarray und dem zweiten Linsenarray umfasst und/oder dass die Vorrichtung Mittel zur Variation des Abstands zwischen dem dritten Linsenarray und dem vierten Linsenarray umfasst.

Vorzugsweise können diese Mittel für eine Verschiebung des zweiten Linsenarrays relativ zum ersten (demzufolge vorzugsweise ortsfest im Strahlengang angeordneten) Linsenarray eingerichtet sein. Alternativ oder zusätzlich können diese Mittel für eine Verschiebung des vierten Linsenarrays relativ zum dritten (demzufolge vorzugsweise ortsfest im Strahlengang angeordneten) Linsenarray eingerichtet sein. Durch eine Änderung des Abstands zwischen dem ersten Linsenarray und dem zweiten Linsenarray beziehungsweise des Abstands zwischen dem dritten Linsenarray und dem vierten Linsenarray kann die Winkelverteilung der homogenisierten Laserstrahlung gezielt verändert und angepasst werden. So kann zum Beispiel durch Verschieben des zweiten Linsenarrays die Linienlänge des ausgeleuchteten Bereichs der Arbeitsebene in einem großen Bereich stufenlos eingestellt werden. Überraschend hat es sich gezeigt, dass dabei in besonders vorteilhafter Weise keine nennenswerten Leistungsverluste auftreten.

In einer besonders vorteilhaften Ausführungsform können die Mittenabstände p1, p2 der Zylinderlinsenmittel des ersten und zweiten Linsenarrays so gewählt sein, dass eine Höhe h2 eines äußeren Randstrahls eines n-ten, außermittigen Teilstrahlenbündels innerhalb des diesem zugeordneten Zylinderlinsenmittels des zweiten Linsenarrays liegt, wobei gilt: h2 < p1 - (n+1)^{∗}(p1-p2).

In einer besonders bevorzugten Ausführungsform wird vorgeschlagen, dass für das Verhältnis der Mittenabstände p3/p4 der Zylinderlinsenmittel des dritten und des vierten Linsenarrays gilt: 1 < p3/p4 ≤ 1,1, vorzugsweise 1 < p3/p4 ≤ 1,05.

Um in der Arbeitsebene die gewünschte homogene, linienförmige Intensitätsverteilung zu erhalten, werden die Mittenabstände p1, p2, die Brennweiten f₁, f₂ und deren Abstand d sowie der Abstand zur Arbeitsebene so gewählt, dass die weiter außen ("off-axis") stehenden Zylinderlinsenmittel des zweiten Linsenarrays aus unterschiedlichen Winkeln ein gemeinsames Feld in der Arbeitsebene beleuchten. Bei einer linearen Verschiebung des zweiten Linsenarrays ändern sich der Durchmesser der auf die Zylinderlinsenmittel des zweiten Linsenarrays treffenden Teilstrahlenbündel und damit auch die Öffnungswinkel der austretenden Teilstrahlenbündel.

Wie oben erwähnt, ist das Verhältnis der Mittenabstände p1/p2 der Zylinderlinsenmittel des ersten und des zweiten Linsenarrays vorzugsweise wenige Prozent größer als 1 (zum Beispiel 1,05). Der resultierende Strahlversatz p = n^{∗}(p1-p2) erzeugt nach dem Sinus-Satz einen Winkel β für einen zentralen Hauptstrahl im n-ten außermittigen Teilstrahlenbündel. Es gilt sin β = p/f₂. Dabei ist f₂ die Brennweite der Zylinderlinsenmittel des zweiten Linsenarrays. In einer Entfernung d' vom zweiten Linsenarray sollen sich die Hauptstrahlen aller Teilstrahlenbündel treffen, so dass gilt: n^{∗}p1 = d'^{∗}tan β.

Charakteristisch ist, dass sich die äußeren Randstrahlen eines jeden Teilstrahlenbündels in Strahlausbreitungsrichtung kurz hinter dem zweiten Linsenarray kreuzen. Wenn der Abstand d zwischen dem ersten Linsenarray und dem zweiten Linsenarray um Δ d verändert wird und d' >> Δ d ist, treffen sich die Hauptstrahlen der Teilstrahlenbündel noch näherungsweise am gleichen Ort. Dabei ändert sich jedoch der Öffnungswinkel α der Teilstrahlenbündel, da die äußeren Randstrahlen in anderer Höhe auf die Zylinderlinsenmittel des zweiten Linsenarrays treffen. So lässt sich mit d' = 100mm und Δ d=12mm eine Linie zwischen 4 und 12mm beleuchten.

Der Öffnungswinkel a eines jeden Teilstrahlenbündels ist gegeben durch α = arcsin(p1/2^{∗}fₕ). Dabei ist fₕ die resultierende, gemeinsame Brennweite der Zylinderlinsenmittel des ersten und zweiten Linsenarrays, für die gilt fₕ = (f₁^{∗}f₂)/(f₁ + f₂ - d). Der Abstand e einer gemeinsamen Hauptebene vom ersten, fest stehenden Linsenarray ist gegeben durch e = d - (f₂^{∗}d)/(f₁ + f₂ - d). Die Linienlänge l ergibt sich aus dem Öffnungswinkel a über die Beziehung: l = 2 ((tan(α)^{∗}(d+d'-e)) - p1/2).

Mit den vorstehend genannten mathematischen Beziehungen sind die Brennweiten f₁, f₂ der Zylinderlinsenmittel auf den ersten optisch funktionalen Grenzflächen des ersten und zweiten Linsenarrays mit der Linienlänge l verknüpft. Dabei wird davon ausgegangen, dass die Zylinderlinsenmittel des ersten Linsenarrays voll ausgeleuchtet sind. Das bedeutet, dass die Höhe des Randstrahls jedes auf die Zylinderlinsenmittel des ersten Linsenarrays treffenden Teilstrahlenbündels dem halben Mittenabstand (Pitch) p1/2 entspricht. Die Zylinderlinsenmittel des zweiten Linsenarrays sollen möglichst nicht überstrahlt werden. In einer besonders vorteilhaften Ausführungsform können die Mittenabstände p1, p2 der Zylinderlinsenmittel des ersten und zweiten Linsenarrays so gewählt sein, dass eine Höhe h2 eines äußeren Randstrahls eines n-ten, außermittigen Teilstrahlenbündels innerhalb des diesem zugeordneten Zylinderlinsenmittels des zweiten Linsenarrays liegt, wobei gilt: h2 < p1 - (n+1)^{∗}(p1-p2). Dadurch wird in vorteilhafter Weise erreicht, dass die Höhe eines äußeren Randstrahls des betreffenden Teilstrahlenbündels innerhalb des zweiten Zylinderlinsenmittels liegt. Ferner lässt sich der Pitchunterschied p1, p2 mit der Anzahl n der ausgeleuchteten Zylinderlinsenmittel verknüpfen.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine Seitenansicht einer Vorrichtung zur Homogenisierung eines Laserstrahls, die gemäß einem bevorzugten Ausführungsbeispiel der vorliegenden Erfindung ausgeführt ist,
- Fig. 2: eine Detailansicht eines ersten Substrats und eines zweiten Substrats der Vorrichtung zur Homogenisierung eines Laserstrahls gemäß Fig. 1,
- Fig. 3: eine schematisch stark vereinfachte Prinzipdarstellung, die einzelne Strahlgeometrien veranschaulichen soll.

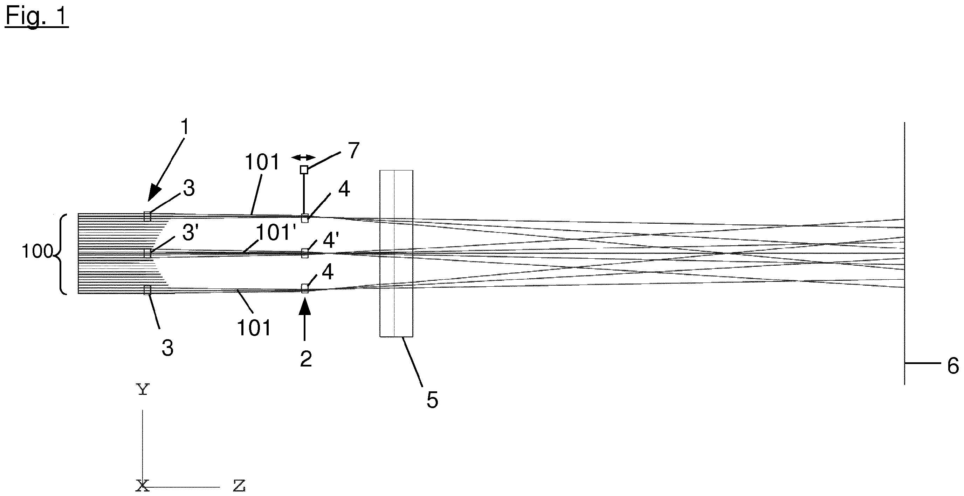

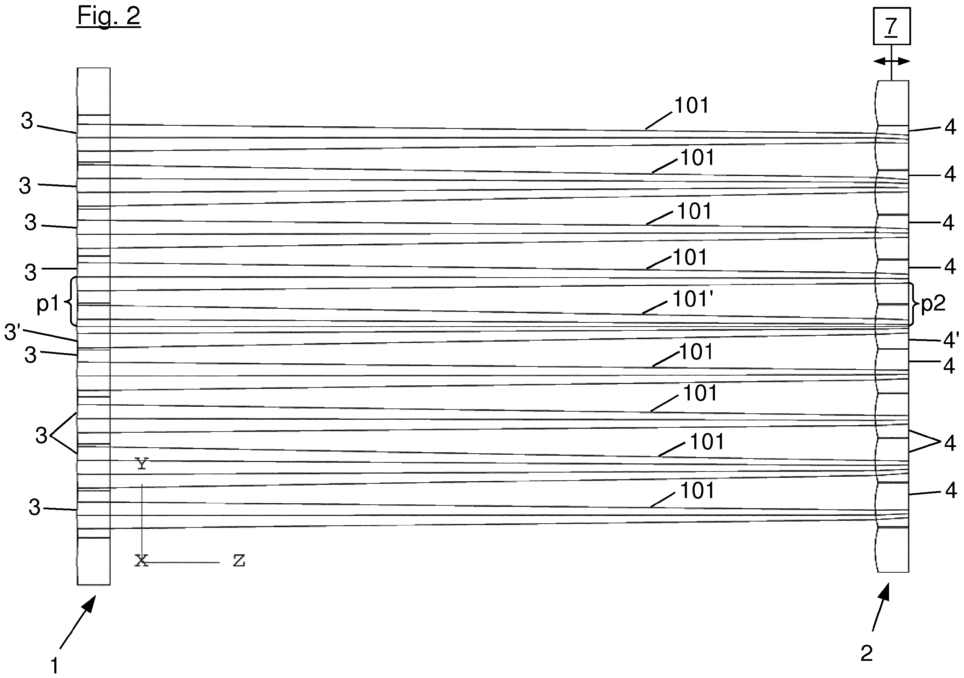

Unter Bezugnahme auf Fig. 1 und 2 soll nachfolgend eine Vorrichtung zur Homogenisierung eines Laserstrahls 100 näher erläutert werden, die gemäß einem bevorzugten Ausführungsbeispiel der vorliegenden Erfindung ausgeführt ist. Zur Vereinfachung der weiteren Erläuterungen wurde in Fig. 1 und Fig. 2 ein kartesisches Koordinatensystem eingezeichnet, welches die y-Richtung und die dazu orthogonale z-Richtung definiert, welche vorliegend die Ausbreitungsrichtung der Laserstrahlung 100 ist. Die ebenfalls angedeutete x-Richtung des kartesischen Koordinatensystems erstreckt sich folgerichtig in die Zeichenebene hinein.

Die Vorrichtung zur Homogenisierung eines Laserstrahls 100 ist zweistufig ausgeführt und umfasst ein erstes Substrat 1 mit einer ersten optisch funktionalen Grenzfläche (Lichteintrittsfläche), die eine Mehrzahl in y-Richtung nebeneinander angeordneter Zylinderlinsenmittel 3 aufweist, deren Zylinderachsen sich parallel zueinander in x-Richtung (und damit in die Zeichenebene hinein) erstrecken und mit einer zweiten optisch funktionalen Grenzfläche (Lichtaustrittsfläche), die vorliegend plan ausgeführt ist.

Die Zylinderlinsenmittel 3 bilden ein erstes Linsenarray. Benachbarte Zylinderlinsenmittel 3 des ersten Linsenarrays weisen einen Mittenabstand oder Scheitelabstand (einen so genannten Pitch) p1 auf, der für alle Paare benachbarter Zylinderlinsenmittel 3 identisch ist. Ferner weisen alle Zylinderlinsenmittel 3 des ersten Linsenarrays in diesem Ausführungsbeispiel identische Brennweiten f₁ auf.

Die Vorrichtung zur Homogenisierung eines Laserstrahls 100 umfasst ferner ein in Strahlausbreitungsrichtung (z-Richtung) hinter dem ersten Substrat 1 angeordnetes zweites Substrat 2 mit einer ersten optisch funktionalen Grenzfläche (Lichteintrittsfläche), die eine Mehrzahl in y-Richtung nebeneinander angeordneter Zylinderlinsenmittel 4 umfasst, und mit einer zweiten optisch funktionalen Grenzfläche, die eine Lichtaustrittsfläche bildet und vorliegend plan ausgeführt ist. Die Zylinderachsen der Zylinderlinsenmittel 4 des zweiten Linsenarrays 2 erstrecken sich wiederum parallel zueinander in x-Richtung und damit in die Zeichenebene hinein.

Die Zylinderlinsenmittel 4 bilden ein zweites Linsenarray. Benachbarte Zylinderlinsenmittel 4 des zweiten Linsenarrays weisen einen Mittenabstand oder Scheitelabstand (Pitch) p2 auf, der für alle Paare benachbarter Zylinderlinsenmittel 4 identisch ist. Ferner weisen alle Zylinderlinsenmittel 4 des zweiten Linsenarrays in diesem Ausführungsbeispiel identische Brennweiten f₂ auf.

In Strahlausbreitungsrichtung hinter dem zweiten Substrat 2 ist in diesem Ausführungsbeispiel ein Zylinderlinsenmittel 5 angeordnet, dessen Zylinderachse sich in y-Richtung und somit orthogonal zu den Zylinderachsen der Zylinderlinsenmittel 3, 4 des ersten und zweiten Linsenarrays erstreckt.

Die Laserstrahlung 100, die von (mindestens) einer hier nicht explizit dargestellten Laserlichtquelle emittiert wird und mit Hilfe mindestens eines Kollimatormittels kollimiert wird, trifft zunächst auf das erste Substrat 1. Die kollimierte Laserstrahlung 100, die zum Beispiel ein Intensitätsprofil in Form eines ein Gauß-Profils aufweisen kann, tritt an der ersten optisch funktionalen Grenzfläche (Lichteintrittsfläche) in das erste Linsenarray ein und wird von den dort ausgebildeten Zylinderlinsenmitteln 3 in eine der Anzahl der Zylinderlinsenmittel 3 entsprechende Anzahl von Teilstrahlenbündeln 101, 101' aufgespalten. Um vorliegend die Darstellung nicht zu verkomplizieren und übersichtlicher zu gestalten, sind in Fig. 1 ganz bewusst lediglich drei Zylinderlinsenmittel 3, 3' (ein mittleres Zylinderlinsenmittel 3' sowie zwei äußere Zylinderlinsenmittel 3) des in Fig. 2 gezeigten ersten Linsenarrays sowie drei diesen zugeordnete Zylinderlinsenmittel 4, 4' (ein mittleres Zylinderlinsenmittel 4' sowie zwei äußere Zylinderlinsenmittel 4) des zweiten Linsenarrays eingezeichnet, so dass in Strahlausbreitungsrichtung hinter dem ersten Substrat 1 drei Teilstrahlenbündel 101, 101' eingezeichnet sind. In der Detailansicht gemäß Fig. 2 sind neun Teilstrahlenbündel 101, 101' dargestellt.

Im weiteren Strahlweg treten die Teilstrahlenbündel 101, 101' durch die erste optisch funktionale Grenzfläche (Lichteintrittsfläche) in das zweite Substrat 2 ein und werden dort von den Zylinderlinsenmitteln 4, 4' des zweiten Linsenarrays ein weiteres Mal gebrochen, bevor sie aus der zweiten optisch funktionalen Grenzfläche aus dem zweiten Substrat 2 heraustreten. Mit diesem Aufbau kann in einer Arbeitsebene 6, die vom zweiten Substrat 2 beabstandet ist, zumindest in einer ersten Richtung (y-Richtung) eine homogene, linienförmige Intensitätsverteilung erhalten werden. Das im Strahlweg hinter dem zweiten Substrat 2 angeordnete Zylinderlinsenmittel 5 ist dazu in der Lage, die nicht homogenisierte Achse der Teilstrahlen 101, 101' in die Arbeitsebene 6, die die Brennebene des Zylinderlinsenmittels 5 ist, zu fokussieren.

Die Vorrichtung zur Homogenisierung eines Laserstrahls 100 umfasst ferner Mittel 7 zur Veränderung des Abstands zwischen dem ersten Substrat 1 und dem zweiten Substrat 2 beziehungsweise zwischen dem ersten Linsenarray und dem zweiten Linsenarray. Die Mittel 7 sind vorliegend mit dem zweiten Substrat 2 gekoppelt und können zum Beispiel einen Einstellring umfassen. Durch eine Änderung des Abstands zwischen dem ersten Linsenarray und dem zweiten Linsenarray kann die Winkelverteilung der homogenisierten Laserstrahlung gezielt verändert und angepasst werden. Durch Verschieben des zweiten Linsenarrays kann die Linienlänge des ausgeleuchteten Bereichs der Arbeitsebene 6 in einem großen Bereich stufenlos eingestellt werden. Überraschend hat es sich gezeigt, dass dabei keine nennenswerten Leistungsverluste auftreten.

Wie insbesondere in Fig. 2 zu erkennen, ist jedem Zylinderlinsenmittel 3 des ersten Linsenarrays (und damit auch jedem von diesem erzeugten Teilstrahlenbündel 101, 101') genau ein Zylinderlinsenmittel 4, 4' des zweiten Linsenarrays zugeordnet. Der Begriff "zugeordnet" bedeutet in diesem Zusammenhang, dass jedes der von den Zylinderlinsenmitteln 3, 3' des ersten Linsenarrays erzeugten Teilstrahlenbündel 101, 101' genau durch eines der Zylinderlinsenmittel 4, 4' des zweiten Linsenarrays hindurchtritt (und zwar durch das dem Teilstrahlenbündel 101, 101' und folglich demjenigen Zylinderlinsenmittel 3, 3' des ersten Linsenarrays, welches diesen Teilstrahl 101, 101' erzeugt hat, zugeordnete Zylinderlinsenmittel 4, 4').

Die Vorrichtung zur Homogenisierung eines Laserstrahls 100 weist somit zwei Linsenarrays mit einer Mehrzahl von Zylinderlinsenmitteln 3, 3', 4, 4' auf. Jedes Zylinderlinsenmittel 3, 3' des ersten Linsenarrays formt somit ein Teilstrahlenbündel 101, 101' aus dem kollimierten Laserstrahl 100, das auf das zugeordnete Linsenmittel 4, 4' des zweiten Linsenarrays trifft und von diesem ein weiteres Mal gebrochen und zur Arbeitsebene gelenkt wird.

Wie insbesondere in Fig. 2 zu erkennen, sind die Mittenabstände p1 der Zylinderlinsenmittel 3, 3' des ersten Linsenarrays verschieden von den Mittenabständen p2 der Zylinderlinsenmittel 4, 4' des zweiten Linsenarrays, wobei p1 > p2 ist. Das Verhältnis der Mittenabstände p1/p2 der Zylinderlinsenmittel 3, 3', 4, 4' des ersten und des zweiten Linsenarrays ist vorzugsweise wenige Prozent größer als 1 (zum Beispiel 1,05). Dass die Mittenabstände p1, p2 zwischen den Linsenscheiteln des ersten Linsenarrays und des zweiten Linsenarrays jeweils unterschiedlich sind, hat zur Folge, dass nur die Linsenscheitel der zentralen Zylinderlinsenmittel 3', 4' der beiden Linsenarrays miteinander fluchten. Für die Linsenscheitel der übrigen Zylinderlinsenmittel 3, 4 der Linsenarrays ergibt sich ein nach außen zunehmender seitlicher Versatz. Ausgehend von dem zentralen Zylinderlinsenmittel 4' in der Mitte des zweiten Linsenarrays, dessen optische Achse mit der optischen Achse des diesem zugeordneten zentralen Zylinderlinsenmittels 3' des ersten Linsenarrays fluchtet, weisen die Zylinderlinsenmittel 4 des zweiten Linsenarrays auf Grund des Scheitelversatzes auch einen nach außen zunehmenden Versatz ihrer jeweiligen optischen Achsen in Bezug auf die optischen Achsen der ihnen zugeordneten Zylinderlinsenmittel 3 des ersten Linsenarrays auf.

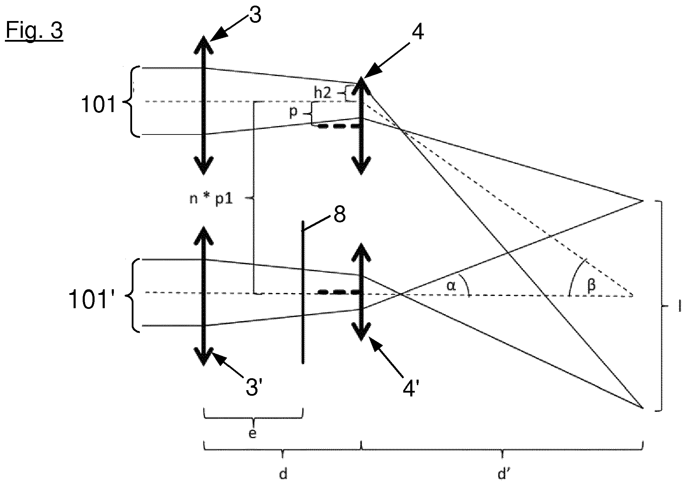

Anhand der Prinzipdarstellung gemäß Fig. 3 sollen nachfolgend einige Einzelheiten der Strahlgeometrien näher erläutert werden.

Um in der Arbeitsebene 6 die gewünschte homogene, linienförmige Intensitätsverteilung zu erhalten, werden die Mittenabstände p1, p2 und Brennweiten f₁, f₂ der Zylinderlinsenmittel 3, 3', 4, 4', der Abstand d zwischen den beiden Linsenarrays sowie der Abstand d' des zweiten Linsenarrays zur Arbeitsebene 6 so gewählt, dass die weiter außen ("off-axis") stehenden Zylinderlinsenmittel 4 des zweiten Linsenarrays aus unterschiedlichen Winkeln ein gemeinsames Feld in der Arbeitsebene 6 beleuchten. Beim Verschieben des zweiten Linsenarrays ändert sich der Durchmesser der auf die Zylinderlinsenmittel 4 des zweiten Linsenarrays treffenden Teilstrahlenbündel 101, 101' und damit auch die Öffnungswinkel der austretenden Teilstrahlenbündel 101, 101'.

Das Verhältnis der Mittenabstände p1/p2 der Zylinderlinsenmittel 3, 3, 4, 4' der Linsenarrays ist vorzugsweise wenige Prozent größer als 1 (zum Beispiel 1,05). Der resultierende Strahlversatz p = n^{∗}(p1-p2) erzeugt nach dem Sinus-Satz einen Winkel β für einen zentralen Hauptstrahl im n-ten außermittigen Teilstrahlenbündel 101. Es gilt dabei: sin β = p/f₂. Dabei ist f₂ die Brennweite der Zylinderlinsenmittel 4, 4' des zweiten Linsenarrays. In einer Entfernung d' vom zweiten Linsenarray sollen sich die Hauptstrahlen aller Teilstrahlenbündel 101, 101' treffen, so dass gilt: n^{∗}p1 = d'^{∗}tan β.

Charakteristisch ist, dass sich die äußeren Randstrahlen eines jeden Teilstrahlenbündels 101, 101' in Strahlausbreitungsrichtung kurz hinter dem zweiten Linsenarray kreuzen. Wenn der Abstand d zwischen dem ersten Linsenarray und dem zweiten Linsenarray um Δ d verändert wird und d' >> Δ d ist, treffen sich die zentralen Hauptstrahlen der Teilstrahlenbündel 101, 101' noch näherungsweise am gleichen Ort. Dabei ändert sich jedoch der Öffnungswinkel α der Teilstrahlenbündel 101, 101', da die äußeren Randstrahlen in anderer Höhe auf die Zylinderlinsenmittel 4, 4' des zweiten Linsenarrays treffen. So lässt sich mit d' = 100mm und Δ d=12mm eine Linie zwischen 4 und 12mm beleuchten.

Der Öffnungswinkel a eines jeden Teilstrahlenbündels 101, 101' ist gegeben durch a = arcsin(p1/2 fₕ). Dabei ist fₕ die resultierende, gemeinsame Brennweite der Zylinderlinsenmittel 3, 3', 4, 4' des ersten und zweiten Linsenarrays für die gilt fₕ = (f₁ f₂)/(f₁ + f₂ - d). Der Abstand e einer gemeinsamen Hauptebene 8 vom ersten, fest stehenden Linsenarray ist gegeben durch e = d - (f₂ d)/(f₁ + f₂ - d). Die Linienlänge l ergibt sich aus dem Öffnungswinkel a über die Beziehung: l = 2 ((tan(a) (d+d'-e)) - p1/2).

Mit den vorstehend genannten mathematischen Beziehungen sind die Brennweiten f₁, f₂ der Zylinderlinsenmittel 3, 3', 4, 4' des ersten und zweiten Linsenarrays mit der Linienlänge l verknüpft. Dabei wird davon ausgegangen, dass die Zylinderlinsenmittel 3, 3' des ersten Linsenarrays voll ausgeleuchtet sind. Das bedeutet, dass die Höhe des Randstrahls jedes auf die Zylinderlinsenmittel 3, 3' des ersten Linsenarrays treffenden Teilstrahlenbündels 101, 101' dem halben Mittenabstand (Pitch) p1/2 entspricht. Die Zylinderlinsenmittel 4, 4' des zweiten Linsenarrays sollen nicht überstrahlt werden. Das bedeutet, dass die Höhe eines äußeren Randstrahls des betreffenden Teilstrahlenbündels 101, 101' innerhalb des diesem in der oben erläuterten Weise zugeordneten Zylinderlinsenmittels 4, 4' liegen soll. Damit gilt: h2 < p1 - (n+1)^{∗}(p1-p2). Mit dieser Forderung lässt sich der Pitchunterschied zwischen den Zylinderlinsenmitteln 3, 3', 4, 4' des ersten Linsenarrays und des zweiten Linsenarrays mit der Anzahl n der ausgeleuchteten Zylinderlinsenmittel 3, 3', 4, 4' verknüpfen.

Vorstehend wurde ein Ausführungsbeispiel einer Vorrichtung zur Homogenisierung eines Laserstrahls 100 beschrieben, bei der jeweils nur eine der beiden optisch funktionalen Grenzflächen der Substrate 1, 2 eine Mehrzahl von Zylinderlinsenmitteln 3, 3', 4, 4' aufweist.

In einer vorteilhaften Weiterbildung der Erfindung wird vorgeschlagen, dass
- das erste Substrat 1 auf der zweiten optisch funktionalen Grenzfläche eine Mehrzahl von Zylinderlinsenmitteln umfasst, die in einer zweiten Richtung nebeneinander angeordnet sind und parallel zueinander orientierte Zylinderachsen aufweisen, welche orthogonal zu den Zylinderachsen der Zylinderlinsenmittel 3, 3' auf der ersten optisch funktionalen Grenzfläche orientiert sind, wobei benachbarte Zylinderlinsenmittel einen Mittenabstand p3 haben,
- das zweite Substrat 2 auf der zweiten optisch funktionalen Grenzfläche eine Mehrzahl von Zylinderlinsenmitteln umfasst, die in einer zweiten Richtung nebeneinander angeordnet sind und parallel zueinander orientierte Zylinderachsen aufweisen, welche orthogonal zu den Zylinderachsen der Zylinderlinsenmittel 4, 4' auf der ersten optisch funktionalen Grenzfläche orientiert sind, wobei benachbarte Zylinderlinsenmittel einen Mittenabstand p4 haben.

Alternativ kann vorgesehen sein, dass die Vorrichtung ein drittes, nicht abgebildetes Substrat mit einem dritten Linsenarray sowie ein viertes, nicht abgebildetes Substrat mit einem vierten Linsenarray umfasst, wobei das dritte Linsenarray eine Mehrzahl von Zylinderlinsenmittel umfasst, die in der zweiten Richtung nebeneinander angeordnet sind und parallel zueinander orientierte Zylinderachsen aufweisen, welche orthogonal zu den Zylinderachsen der Zylinderlinsenmittel 3, 3' des ersten Linsenarrays orientiert sind, und wobei das vierte Linsenarray eine Mehrzahl von Zylinderlinsenmittel umfasst, die in der zweiten Richtung nebeneinander angeordnet sind und parallel zueinander orientierte Zylinderachsen aufweisen, welche orthogonal zu den Zylinderachsen der Zylinderlinsenmittel 4, 4' des zweiten Linsenarrays orientiert sind.

Dabei können insbesondere das dritte und das vierte Substrat in Ausbreitungsrichtung Z hinter dem zweiten Substrat 2 angeordnet sein.

Dadurch ist es möglich, in der Arbeitsebene 6 eine in zwei zueinander senkrechten Richtungen homogen ausgeleuchtete, im Wesentlichen rechteckige Intensitätsverteilung zu erhalten. In einer besonders vorteilhaften Ausführungsform besteht die Möglichkeit, dass die Mittenabstände p3 der Zylinderlinsenmittel des dritten Linsenarrays größer als die Mittenabstände p4 der Zylinderlinsenmittel des vierten Linsenarrays sind. Analog zu den Zylinderlinsenmitteln 3, 3', 4, 4' des ersten und des zweiten Linsenarrays kann auch hier ein Versatz der Linsenscheitel für die außermittigen Zylinderlinsenmittel erhalten werden.

## Patentansprüche

1. Vorrichtung zur Homogenisierung eines Laserstrahls (100), umfassend
- ein erstes Substrat (1) mit einer ersten optisch funktionalen Grenzfläche, durch die die Laserstrahlung (100) in das erste Substrat (1) eintreten kann, und mit einer zweiten optisch funktionalen Grenzfläche, durch die die Laserstrahlung (100) aus dem ersten Substrat (1) heraustreten kann, wobei zumindest eine der beiden optisch funktionalen Grenzflächen eine Mehrzahl konvexer Zylinderlinsenmittel (3, 3') umfasst, die in einer ersten Richtung nebeneinander angeordnet sind und parallel zueinander orientierte Zylinderachsen aufweisen und auf diese Weise ein erstes Linsenarray bilden, wobei benachbarte Zylinderlinsenmittel (3, 3') einen identischen Mittenabstand (p1) und identische Brennweiten (f1) haben und wobei die Zylinderlinsenmittel (3, 3') so ausgebildet sind, dass sie die Laserstrahlung (100) in eine Mehrzahl von Teilstrahlenbündel (101, 101') aufteilen können,
- ein zweites Substrat (2), das im Strahlweg hinter dem ersten Substrat (1) angeordnet ist, mit einer ersten optisch funktionalen Grenzfläche, durch die die Teilstrahlen (101) in das zweite Substrat (2) eintreten können, und mit einer zweiten optisch funktionalen Grenzfläche, durch die die Teilstrahlen (101) aus dem zweiten Substrat (2) heraustreten können, wobei zumindest eine der beiden optisch funktionalen Grenzflächen eine Mehrzahl konvexer Zylinderlinsenmittel (4, 4') umfasst, die in der ersten Richtung nebeneinander angeordnet sind, parallel zueinander orientierte Zylinderachsen aufweisen und auf diese Weise ein zweites Linsenarray bilden, wobei die Zylinderlinsenmittel (4, 4') die Teilstrahlenbündel (101, 101') brechen und in eine Arbeitsebene (6) lenken können, und wobei benachbarte Zylinderlinsenmittel (4, 4') einen identischen Mittenabstand (p2) und identische Brennweiten (f2) haben, wobei jedem Zylinderlinsenmittel (3, 3') des ersten Linsenarrays genau ein Zylinderlinsenmittel (4, 4') des zweiten Linsenarrays zugeordnet ist,
wobei die Mittenabstände (p1) der Zylinderlinsenmittel (3, 3') des ersten Linsenarrays größer als die Mittenabstände (p2) der Zylinderlinsenmittel (4, 4') des zweiten Linsenarrays sind,
wobei ein Linsenscheitel eines zentralen Zylinderlinsenmittels (3') des ersten Linsenarrays mit einem Linsenscheitel des diesem zugeordneten zentralen Zylinderlinsenmittels (4') des zweiten Linsenarrays fluchtet und die Linsenscheitel der übrigen Zylinderlinsenmittel (4) des zweiten Linsenarrays und die Linsenscheitel der ihnen zugeordneten Zylinderlinsenmittel (3) des ersten Linsenarrays ausgehend von der Mitte des zweiten Linsenarrays einen nach außen zunehmenden Scheitelversatz aufweisen, so dass in der Arbeitsebene (6) zumindest in der ersten Richtung eine homogene Intensitätsverteilung erhalten werden kann, **dadurch gekennzeichnet, dass** für das Verhältnis der Mittenabstände p1/p2 der Zylinderlinsenmittel (3, 3', 4, 4') des ersten und des zweiten Linsenarrays gilt: 1 < p1/p2 ≤ 1,1, vorzugsweise 1 < p1/p2 ≤ 1,05.

2. Vorrichtung nach Anspruch 1, **dadurch gekennzeichnet, dass** die Vorrichtung ein Zylinderlinsenmittel (5) umfasst, dessen Zylinderachse senkrecht zu den Zylinderachsen der Zylinderlinsenmittel (3, 3', 4, 4') der beiden Linsenarrays orientiert ist und das so ausgebildet ist und im Strahlweg derart hinter dem zweiten Linsenarray angeordnet ist, dass es die Teilstrahlenbündel (101, 101') in der nach dem Hindurchtritt durch die beiden Linsenarrays nicht homogenisierten Achse in die Arbeitsebene (6) fokussieren kann.

3. Vorrichtung nach Anspruch 1, **dadurch gekennzeichnet, dass**
- das erste Substrat (1) auf der zweiten optisch funktionalen Grenzfläche eine Mehrzahl von Zylinderlinsenmitteln umfasst, die in einer zweiten Richtung nebeneinander angeordnet sind und ein drittes Linsenarray bilden, wobei die in der zweiten Richtung nebeneinander angeordneten Zylinderlinsenmittel des ersten Substrats (1) parallel zueinander orientierte Zylinderachsen aufweisen, welche orthogonal zu den Zylinderachsen der Zylinderlinsenmittel (3, 3') des ersten Linsenarrays orientiert sind, und dass
- das zweite Substrat (2) auf der zweiten optisch funktionalen Grenzfläche eine Mehrzahl von Zylinderlinsenmitteln umfasst, die in einer zweiten Richtung nebeneinander angeordnet sind und ein viertes Linsenarray bilden, wobei die in der zweiten Richtung nebeneinander angeordneten Zylinderlinsenmittel des zweiten Substrats parallel zueinander orientierte Zylinderachsen aufweisen, welche orthogonal zu den Zylinderachsen der Zylinderlinsenmittel (4, 4') des zweiten Linsenarrays orientiert sind.

4. Vorrichtung nach Anspruch 1, **dadurch gekennzeichnet, dass** die Vorrichtung ein drittes Substrat mit einem dritten Linsenarray sowie ein viertes Substrat mit einem vierten Linsenarray umfasst, wobei das dritte Linsenarray eine Mehrzahl von Zylinderlinsenmittel umfasst, die in der zweiten Richtung nebeneinander angeordnet sind und parallel zueinander orientierte Zylinderachsen aufweisen, welche orthogonal zu den Zylinderachsen der Zylinderlinsenmittel (3, 3') des ersten Linsenarrays orientiert sind, und wobei das vierte Linsenarray eine Mehrzahl von Zylinderlinsenmittel umfasst, die in der zweiten Richtung nebeneinander angeordnet sind und parallel zueinander orientierte Zylinderachsen aufweisen, welche orthogonal zu den Zylinderachsen der Zylinderlinsenmittel (4, 4') des zweiten Linsenarrays orientiert sind.

5. Vorrichtung nach einem der Ansprüche 3 oder 4, **dadurch gekennzeichnet, dass** die Mittenabstände (p3) der Zylinderlinsenmittel des dritten Linsenarrays größer als die Mittenabstände (p4) der Zylinderlinsenmittel des vierten Linsenarrays sind.

6. Vorrichtung nach einem der Ansprüche 1 bis 5, **dadurch gekennzeichnet, dass** die Brennweiten f₁ aller Zylinderlinsenmittel (3, 3') des ersten Linsenarrays identisch sind und/oder dass die Brennweiten f₂ aller Zylinderlinsenmittel (4, 4') des zweiten Linsenarrays identisch sind.

7. Vorrichtung nach einem der Ansprüche 4 bis 6, **dadurch gekennzeichnet, dass** die Brennweiten f₃ aller Zylinderlinsenmittel des dritten Linsenarrays identisch sind und/oder dass die Brennweiten f₄ aller Zylinderlinsenmittel des vierten Linsenarrays identisch sind.

8. Vorrichtung nach einem der Ansprüche 1 bis 7, **dadurch gekennzeichnet, dass** die Vorrichtung Mittel (7) zur Variation des Abstands zwischen dem ersten Linsenarray und dem zweiten Linsenarray umfasst.

9. Vorrichtung nach einem der Ansprüche 4 bis 8, **dadurch gekennzeichnet, dass** die Vorrichtung Mittel (7) zur Variation des Abstands zwischen dem dritten Linsenarray und dem vierten Linsenarray umfasst.

10. Vorrichtung nach einem der Ansprüche 8 oder 9, **dadurch gekennzeichnet, dass** die Mittel (7) für eine Verschiebung des zweiten Linsenarrays relativ zum ersten Linsenarray eingerichtet sind und/oder dass die Mittel für eine Verschiebung des vierten Linsenarrays relativ zum dritten Linsenarray eingerichtet sind.

11. Vorrichtung nach einem der Ansprüche 1 bis 10, **dadurch gekennzeichnet, dass** die Mittenabstände (p1, p2) der Zylinderlinsenmittel (3, 3', 4, 4') des ersten und zweiten Linsenarrays so gewählt sind, dass eine Höhe h2 eines äußeren Randstrahls eines n-ten, außermittigen Teilstrahlenbündels (101) innerhalb des diesem zugeordneten Zylinderlinsenmittels (4) des zweiten Linsenarrays liegt, wobei gilt: h2 < p1 - (n+1)^{∗}(p1-p2).

12. Vorrichtung nach einem der Ansprüche 4 bis 11, **dadurch gekennzeichnet, dass** für das Verhältnis der Mittenabstände p3/p4 der Zylinderlinsenmittel des dritten und des vierten Linsenarrays gilt:
1 < p3/p4 ≤ 1,1, vorzugsweise 1 < p3/p4 ≤ 1,05.

## Claims

1. Device for homogenising a laser beam (100), comprising:
- a first substrate (1) having a first optically functional interface, through which the laser radiation (100) can enter the first substrate (1), and having a second optically functional interface, through which the laser radiation (100) can emerge from the first substrate (1), wherein at least one of the two optically functional interfaces comprises a plurality of convex cylindrical lenses (3, 3') which are arranged alongside one another in a first direction and have cylinder axes oriented parallel to one another and in this way form a first lens array, wherein adjacent cylindrical lenses (3, 3') have an identical pitch (p1) and identical focal lengths (f1) and
wherein the cylindrical lenses (3, 3') are embodied such that they can split the laser radiation (100) into a plurality of partial beams (101, 101'),
- a second substrate (2), which is arranged in the beam path downstream of the first substrate (1), having a first optically functional interface, through which the partial beams (101) can enter the second substrate (2), and having a second optically functional interface, through which the partial beams (101) can emerge from the second substrate (2), wherein at least one of the two optically functional interfaces comprises a plurality of convex cylindrical lenses (4, 4') which are arranged alongside one another in the first direction, have cylinder axes oriented parallel to one another and in this way form a second lens array, wherein the cylindrical lenses (4, 4') can refract the partial beams (101, 101') and direct them into a working plane (6), and wherein adjacent cylindrical lenses (4, 4') have an identical pitch (p2) and identical focal lengths (f2),
wherein exactly one cylindrical lens (4, 4') of the second lens array is assigned to each cylindrical lens (3, 3') of the first lens array,
wherein the pitches (p1) of the cylindrical lenses (3, 3') of the first lens array are greater than the pitches (p2) of the cylindrical lenses (4, 4') of the second lens array, wherein a lens vertex of a central cylindrical lens (3') of the first lens array is aligned with a lens vertex of the central cylindrical lens (4') of the second lens array that is assigned thereto, and the lens vertices of the other cylindrical lenses (4) of the second lens array and the lens vertices of the cylindrical lenses (3) of the first lens array that are assigned thereto have an outwardly increasing vertex offset proceeding from the centre of the second lens array, such that a homogeneous intensity distribution can be obtained in the working plane (6) at least in the first direction, **characterised in that** for the ratio of the pitches p1/p2 of the cylindrical lenses (3, 3', 4, 4') of the first and second lens arrays it holds true that: 1 < p1/p2 ≦ 1.1, preferably 1 < p1/p2 ≦ 1.05.

2. Device according to claim 1, **characterised in that** the device comprises a cylindrical lens (5) whose cylinder axis is oriented perpendicular to the cylinder axes of the cylindrical lenses (3, 3', 4, 4') of the two lens arrays and which is embodied and arranged in the beam path downstream of the second lens array in such a way that it can focus the partial beams (101, 101') in the axis not homogenised after passage through the two lens arrays into the working plane (6).

3. Device according to claim 1, **characterised in that**
- the first substrate (1) comprises on the second optically functional interface a plurality of cylindrical lenses which are arranged alongside one another in a second direction and form a third lens array, wherein the cylindrical lenses of the first substrate (1) that are arranged alongside one another in the second direction have cylinder axes which are oriented parallel to one another and which are oriented orthogonally to the cylinder axes of the cylindrical lenses (3, 3') of the first lens array, and **in that**
- the second substrate (2) comprises on the second optically functional interface a plurality of cylindrical lenses which are arranged alongside one another in a second direction and form a fourth lens array, wherein the cylindrical lenses of the second substrate that are arranged alongside one another in the second direction have cylinder axes which are oriented parallel to one another and which are oriented orthogonally to the cylinder axes of the cylindrical lenses (4, 4') of the second lens array.

4. Device according to claim 1, **characterised in that** the device comprises a third substrate having a third lens array and also a fourth substrate having a fourth lens array, wherein the third lens array comprises a plurality of cylindrical lenses which are arranged alongside one another in the second direction and have cylinder axes which are oriented parallel to one another and which are oriented orthogonally to the cylinder axes of the cylindrical lenses (3, 3') of the first lens array, and wherein the fourth lens array comprises a plurality of cylindrical lenses which are arranged alongside one another in the second direction and have cylinder axes which are oriented parallel to one another and which are oriented orthogonally to the cylinder axes of the cylindrical lenses (4, 4') of the second lens array.

5. Device according to any of claims 3 or 4, **characterised in that** the pitches (p3) of the cylindrical lenses of the third lens array are greater than the pitches (p4) of the cylindrical lenses of the fourth lens array.

6. Device according to any of claims 1 to 5, **characterised in that** the focal lengths f₁ of all the cylindrical lenses (3, 3') of the first lens array are identical and/or **in that** the focal lengths f₂ of all the cylindrical lenses (4, 4') of the second lens array are identical.

7. Device according to any of claims 4 to 6, **characterised in that** the focal lengths f₃ of all the cylindrical lenses of the third lens array are identical and/or **in that** the focal lengths f₄ of all the cylindrical lenses of the fourth lens array are identical.

8. Device according to any of claims 1 to 7, **characterised in that** the device comprises means (7) for varying the distance between the first lens array and the second lens array.

9. Device according to any of claims 4 to 8, **characterised in that** the device comprises means (7) for varying the distance between the third lens array and the fourth lens array.

10. Device according to any of claims 8 or 9, **characterised in that** the means (7) are designed for displacing the second lens array relative to the first lens array and/or **in that** the means are designed for displacing the fourth lens array relative to the third lens array.

11. Device according to any of claims 1 to 10, **characterised in that** the pitches (p1, p2) of the cylindrical lenses (3, 3', 4, 4') of the first and second lens arrays are chosen such that a height h2 of an outer marginal ray of an n-th, eccentric partial beam (101) lies within the cylindrical lens (4) of the second lens array that is assigned thereto, wherein it holds true that: h2 < p1 - (n+1)^{∗}(p1-p2).

12. Device according to any of claims 4 to 11, **characterised in that** for the ratio of the pitches p3/p4 of the cylindrical lenses of the third and fourth lens arrays it holds true that: 1 < p3/p4 ≦ 1.1, preferably 1 < p3/p4 ≦ 1.05.

## Revendications

1. Dispositif d'homogénéisation d'un rayon laser (100), comprenant
- un premier substrat (1) avec une première interface optiquement fonctionnelle, à travers laquelle le rayon laser (100) peut pénétrer dans le premier substrat (1), et avec une deuxième interface optiquement fonctionnelle, à travers laquelle le rayon laser (100) provenant du premier substrat (1) peut émerger, au moins l'une des deux interfaces optiquement fonctionnelles comprenant une pluralité de moyens formant des lentilles cylindriques convexes (3, 3'), qui sont disposées côte à côte dans une première direction et ont des axes de cylindre orientés parallèlement les uns aux autres et forment ainsi un premier réseau de lentilles, les moyens formant des lentilles cylindriques (3, 3') adjacents ayant une distance centrale (p1) identique et des focales (f1) identiques et les lentilles cylindriques (3, 3') étant conçues de manière à pouvoir diviser le rayon laser (100) en une pluralité de faisceaux partiels (101, 101'),
- un deuxième substrat (2), qui est disposé dans le trajet de faisceau derrière le premier substrat (1), avec une première interface optiquement fonctionnelle, à travers laquelle les faisceaux partiels (101) peuvent pénétrer dans le deuxième substrat (2), et avec une deuxième interface optiquement fonctionnelle à travers laquelle les faisceaux partiels (101) peuvent émerger du deuxième substrat (2), au moins une des deux interfaces optiquement fonctionnelles comprenant une pluralité de lentilles cylindriques convexes (4, 4') qui sont disposées côte à côte dans la première direction, ont des axes de cylindre orientés parallèlement les uns aux autres et forment ainsi un deuxième réseau de lentilles, les moyens formant des lentilles cylindriques (4, 4') interceptant les faisceaux partiels (101, 101') et pouvant les diriger dans un plan de travail (6), et les moyens formant des lentilles cylindriques adjacents (4, 4') ayant une distance centrale (p2) identique et des focales (f2) identiques,
chaque moyen formant des lentilles cylindriques (3, 3') du premier réseau de lentilles étant affecté exactement un moyen formant des lentilles cylindriques (4, 4') du deuxième réseau de lentilles,
les distances centrales (p1) des moyens formant des lentilles cylindriques (3, 3') du premier réseau de lentilles étant plus grandes que les distances centrales (p2) des moyens formant des lentilles cylindriques (4, 4') du deuxième réseau de lentilles, un sommet de lentille d'un moyen central formant des lentilles cylindriques (3') du premier réseau de lentilles s'alignant avec un sommet de lentille du moyen central formant des lentilles cylindriques (4') du deuxième réseau de lentilles qui lui est affecté et les sommets de lentille des autres moyens formant des lentilles cylindriques (4) du deuxième réseau de lentilles et les sommets de lentille des moyens formant des lentilles cylindriques (3) du premier réseau de lentilles qui leur sont affectés procédant du centre du deuxième réseau de lentilles ayant un désalignement croissant des sommets vers l'extérieur de sorte qu'une distribution d'intensité homogène peut être obtenue dans le plan de travail (6) au moins dans la première direction, **caractérisée en ce que** ce qui suit s'applique pour le rapport des distances centrales p1/p2 des moyens formant des lentilles cylindriques (3, 3', 4, 4') du premier et du deuxième réseau de lentilles :
1 < p1/p2 ≤ 1,1, de préférence 1 < p1/p2 ≤ 1,05.

2. Dispositif selon la revendication 1, **caractérisé en ce que** le dispositif comprend un moyen formant des lentilles cylindriques (5) dont l'axe de cylindre est orienté perpendiculairement aux axes de cylindre des moyens formant des lentilles cylindriques (3, 3', 4, 4') des deux réseaux de lentilles et qui est conçu et disposé dans le trajet de faisceau derrière le deuxième réseau de lentilles de manière à pouvoir focaliser les faisceaux partiels (101, 101') dans le plan de travail (6) dans l'axe non homogénéisé après avoir traversé les deux réseaux de lentilles.

3. Dispositif selon la revendication 1, **caractérisé en ce que**
- le premier substrat (1) sur la deuxième interface optiquement fonctionnelle comprend une pluralité de moyens formant des lentilles cylindriques qui sont disposés côte à côte dans une deuxième direction et forment un troisième réseau de lentilles, les moyens formant des lentilles cylindriques du premier substrat (1) étant disposés côte à côte dans la deuxième direction parallèlement les uns aux autres ayant des axes de cylindre orientés, qui sont orientés orthogonalement aux axes de cylindre des moyens formant des lentilles cylindriques (3, 3') du premier réseau de lentilles, et que
- le deuxième substrat (2) sur la deuxième interface optiquement fonctionnelle comprend une pluralité de moyens formant des lentilles cylindriques qui sont disposés côte à côte dans une deuxième direction et forment un quatrième réseau de lentilles, les moyens formant des lentilles cylindriques du deuxième substrat étant disposés côte à côte dans la deuxième direction parallèlement les uns aux autres ayant des axes de cylindre orientés, qui sont orientés orthogonalement aux axes de cylindre des moyens formant des lentilles cylindriques (4, 4') du deuxième réseau de lentilles.

4. Dispositif selon la revendication 1, **caractérisé en ce que** le dispositif comprend un troisième substrat avec un troisième réseau de lentilles et un quatrième substrat avec un quatrième réseau de lentilles, le troisième réseau de lentilles comprenant une pluralité de moyens formant des lentilles cylindriques, qui sont disposés côte à côte dans la deuxième direction et ont des axes de cylindre orientés parallèlement les uns aux autres, qui sont orientés orthogonalement aux axes de cylindre des moyens formant des lentilles cylindriques (3, 3') du premier réseau de lentilles, et le quatrième réseau de lentilles comprenant une pluralité de moyens formant des lentilles cylindriques, qui sont disposés côte à côte dans la deuxième direction et ont des axes de cylindre orientés parallèlement les uns aux autres, qui sont orthogonaux sont orientés aux axes de cylindre des moyens formant des lentilles cylindriques (4, 4') du deuxième réseau de lentilles.

5. Dispositif selon l'une des revendications 3 ou 4, **caractérisé en ce que** les distances centrales (p3) des moyens formant des lentilles cylindriques du troisième réseau de lentilles sont supérieures aux distances centrales (p4) des moyens formant des lentilles cylindriques du quatrième réseau de lentilles.

6. Dispositif selon l'une des revendications 1 à 5, **caractérisé en ce que** les focales f₁ de tous les moyens formant des lentilles cylindriques (3, 3') du premier réseau de lentilles sont identiques et/ou que les focales f₂ de tous les moyens formant des lentilles cylindriques (4, 4') du deuxième réseau de lentilles sont identiques.

7. Dispositif selon l'une des revendications 4 à 6, **caractérisé en ce que** les focales f₃ de tous les moyens formant des lentilles cylindriques du troisième réseau de lentilles sont identiques et/ou que les focales f₄ de tous les moyens formant des lentilles cylindriques du quatrième réseau de lentilles sont identiques.

8. Dispositif selon l'une des revendications 1 à 7, **caractérisé en ce que** le dispositif comprend des moyens (7) pour faire varier la distance entre le premier réseau de lentilles et le deuxième réseau de lentilles.

9. Dispositif selon l'une des revendications 4 à 8, **caractérisé en ce que** le dispositif comprend des moyens (7) pour faire varier la distance entre le troisième réseau de lentilles et le quatrième réseau de lentilles.

10. Dispositif selon l'une des revendications 8 ou 9, **caractérisé en ce que** les moyens (7) sont configurés pour décaler le deuxième réseau de lentilles par rapport au premier réseau de lentilles et/ou **en ce que** les moyens sont configurés pour décaler le quatrième réseau de lentilles par rapport au troisième réseau de lentilles.

11. Dispositif selon l'une des revendications 1 à 10, **caractérisé en ce que** les distances centrales (p1, p2) des moyens formant des lentilles cylindriques (3, 3', 4, 4') des premier et deuxième réseaux de lentilles sont choisies de sorte qu'une hauteur h2 d'un rayon marginal extérieur d'un énième, le faisceau partiel excentré (101) se trouve à l'intérieur du moyen formant des lentilles cylindriques (4) du deuxième réseau de lentilles qui lui est affecté, où : h2 < p1 - (n+1)^{∗}(p1-p2).

12. Dispositif selon l'une des revendications 4 à 11, **caractérisé en ce que** ce qui suit s'applique pour le rapport des distances centrales p3/p4 des moyens formant des lentilles cylindriques des troisième et quatrième réseaux de lentilles :
1 < p3/p4 ≤ 1,1, de préférence 1 < p3/p4 ≤ 1,05.
